# EUROPEAN PATENT SPECIFICATION

(11) **EP 0 872 142 B1**
(45) Date of publication and mention of the grant of the patent: **14.07.2004**
(21) Application number: 96908406.0
(22) Date of filing: 29.02.1996
(51) Int. Cl.: H04Q 7/38

(54) **DEVICE AND PROCEDURE FOR AUTOMATIC REGISTRATION IN A TELECOMMUNICATIONS NETWORK**
EINRICHTUNG UND VERFAHREN FÜR AUTOMATISCHE REGISTRIERUNG IN EINEM TELEKOMMUNIKATIONSNETZ
DISPOSITIF ET PROCEDURE D'ENREGISTREMENT AUTOMATIQUE DANS UN RESEAU DE TELECOMMUNICATIONS

(30) Priority: 23.03.1995 SE 9501048
(43) Date of publication of application: 21.10.1998
(73) Proprietor: TELIA AB, 123 86 Farsta (SE)
(72) Inventor: HURTSEN, Björn, S-237 41 Bjärred (SE)
(74) Representative: Karlsson, Leif Karl Gunnar
(86) International application number: PCT/SE1996/000260
(87) International publication number: WO 1996/029839

(56) References cited:
- EP-A- 0 520 194

## Description

### TECHNICAL APPLICATION

Device at telecommunications system, including a mobile communications system and a fixed telecommunications system which includes at least one telephone exchange at which the mobile telecommunications system also includes at least one telephone exchange (MSC) and a home register (HLR) which is the register the system asks for to locate a subscriber which is within the coverage area which the mobile system covers and a procedure to change over a mobile subscriber's telephone call to the fixed network without the subscriber needing at every change-over to utilize the push-buttons on his telephone.

### PRIOR ART

It has previously been suggested different ways and devices to forward telephone calls.

Through the European patent document EP,A2, 484067 is described automatic forwarding of calls. Calls are forwarded automatically to a subscriber who is on the move by collecting information regarding position when the subscriber performs certain actions, such as doing business with credit card or making a call by means of a credit card.

The European patent document EP-A2-0 520 194 discloses a location independent personal telecommunications system. The system functions by routing the incoming call to the personal telephone number to a telephone at the subscriber's current location or notifying the subscriber of the call if telephone communication is not available. An incoming call made to the personal telephone number assigned to the subscriber is routed by the existing public communications network to a service node dedicated to the personal telecommunications system. The service node then instantly accesses the subscriber's current, or last known location and routes the incoming call to the proper directory telephone number for that location. The location of the subscriber is determined by the personal telecommunications system through a radio messaging system that monitors and tracks the subscriber's location by means of a personal communicator carried by the subscriber. This location information is stored in a look-up table at the service node along with communications routing information and accessed as needed to route incoming personal telephone calls. The personal communicator is a credit card sized device that easily fits in the subscriber's shirt, briefcase, wallet or purse. The communicator contains a limited range radio transceiver. The system also comprises primary base stations which are base stations located in each subscriber's primary communications locations, such as home, office and vehicle. The primary base stations are placed in the vicinity of the phone at each primary location.

### DESCRIPTION OF THE INVENTION

### TECHNICAL PROBLEM

The aim with the invention is to achieve an, in relation to the prior art, improved communications system.

Modern mobile telephone systems are automatic. But still it is of course ultimately a matter of radio communication. But for users the mobile telephone equipment behaves as just any telephone. The guidelines for the system development have been:
- Automatic traffic shall be possible to establish both to and from the mobile telephone subscriber.
- It shall be possible for the mobile telephone subscriber to move freely within the coverage area of the network. Communication shall be possible to establish between fixed and mobile telephones within the whole area.
- Subscriber number shall always be the same independent of where the mobile telephone subscriber is.
- The fee which is debited the mobile telephone subscriber shall be independent of the distance.
- The mobile telephone subscriber shall not need to inform about geographical position - the system shall automatically know the position of every mobile telephone subscriber. Each mobile belongs to a home register (HLR). This register is connected to the mobile telephone exchange (MSC). This register contains all necessary mobile and subscriber information such as where the mobile is. This is also called routing. This routing results in that the subscriber can always receive his/her calls with the same number, independent of where he/she is within the coverage area.
- The telecommunications system shall be a simple as possible, i.e. require minor changes to known telecommunications system.
- A user of the telecommunications system shall not be forced to use a further device.
   Sometimes it happens that a subscriber intends not to be on the move during a period. He or she may be in a milieu where the fixed network is well built out and the advantages of using the mobile telephone are not so obvious. One may, perhaps, for a certain period not have time to answer with the mobile telephone, and one then wants the calls to be switched over to some other telephone. One possibility then is to forward the telephone calls to some other telephone, which can be made by performing various, extensive pressing of push-buttons on the telephone.
- This change-over is by some users regarded as very tiresome, awkward and timeconsuming. The problem then is to make this supplied service automatic, which in principle means that the fixed network shall keep up with where the subscriber is. Which might also be called roaming in the fixed network.

### THE SOLUTION

The above aims are achieved by the invention showing the in the enclosed patent claims presented characteristics.

### ADVANTAGES

The invention gives a lot of advantages, among other things is a better and more flexible communications system obtained. Further the handling of the mobile telephones and the mobile stations is made easier. The probability for reaching a wanted person increases. The use of one telephone number for a subscriber in his/her different situations in the course of a day also results in that the accessibility and availability is increased.

### DESCRIPTIONS OF FIGURES

The invention will now be described by means of not restricted examples of embodiment and with references to enclosed, schematically performed drawing. In the drawing

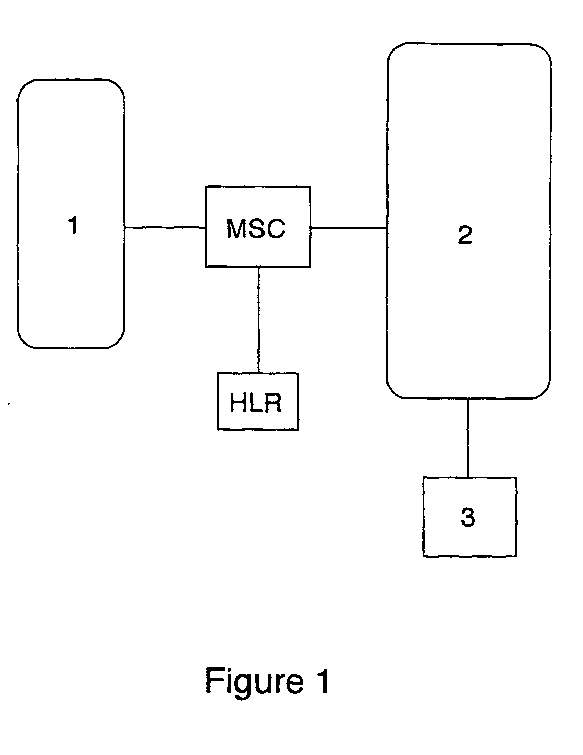

Figure 1 shows a system arrangement according to the invention.

### DETAILED DESCRIPTION

Figure 1 shows a mobile communications system (1) which among other things includes communications network and other network equipment etc and a fixed communications network with customary equipment. The mobile network communicates via radio.

The whole coverage area of the mobile telephone network is divided into exchange areas, MSC-areas, which in their turn can consist of one or more traffic areas, "Location areas". What is significant for a location area is that a mobile can move within the area without needing to update a traffic area register, "location register". Within each location area there are a number of base stations connected which has a coverage over local areas called cells.

The traffic areas consist of a number of Base Station Systems (BSS). A base station system covers a base station area consisting of one or more cells. The base station system consists of Base Station Controller (BSC) and a number of stations containing both transmitters and receivers, so called Base Transceiver Stations (BTS).

BSC is a network component which controls one or more BTS, at which the main tasks are management of traffic channel by channel allocation, control and disconnection of link, and power control and management of measurements at handover.

BTS is a network component which serves a cell. BTS contains one or more combined transmitters/receivers, Transceivers (TRX).

A PLMN is accordingly divided into one or more mobile telephone exchanges depending on the size of the system (capacity and coverage area) which the operator supplies in his system.

The mobile telephone exchange is called a "Mobile Service Switching center" (MSC). The MSC acts as an interface between the fixed telephone network and the mobile telephone network (Gateway MSC) and between a number of MSCs which are serving different geographical parts of the network.

The mobile station is the subscriber's equipment which can be mounted in a car or portable by hand. In GSM there is a definite difference between the physical device and the subscription. All information which is connected to the subscriber is stored on a "smart card" which can be used in just any mobile station.
The Visited Location Register (VLR) contains subscriber information to those who are in the traffic areas belonging to this VLR. When subscriber "mobile" is searched, "roaming number" is fetched by HLR, which has a reference to current Visited Location Register (VLR). In this way the network can rapidly and efficiently find the mobile at call from the telecommunications network. Each mobile belongs to a Home Location Register (HLR). This register contains all necessary subscriber - and mobile information, among other things information about in which VLR and traffic area the mobile is.

HLR is the register which gateway MSC or a telephone station (in the fixed network) asks about to get "roaming number" to wanted mobile. If a mobile moves in one traffic area to another, all relevant register parameters of the mobile is transferred from HLR to the

VLR of the new traffic area. In HLR a reference is made up to the new VLR.

According to Figure 1 the telecommunications system according to the invention includes a mobile communications system (1) and a fixed communications system (2). Consequently the idea is that one shall connect the radio based network and the conventionally switched network. This network then includes one or more telephone exchanges MSC, and one or more registers which cooperates in different ways. The register which is used today to locate a subscriber who is in the area covered by the mobile coverage area is called Home Location Register (HLR). The fixed network is now furnished with a register (3) which has a corresponding function as the Home Location Register in the mobile network. There is also a possible concept of combining these two registers. Mentioned register or register device (1) can be activated from the mobile station in a way that when the switch is turned off the register (3) is activated making the fixed system by the register (3) getting information about where in the fixed system (2) the subscriber is and, more exactly, at which terminal. In another embodiment activation can be made by another, at the device existing, push-button or the like.

The register device (3) receives position parameters from the Home Location Register (HLR) where a mobile subscriber is when the mobile telephone is turned off. By the switching functions in the fixed network (2) cooperating with said register device (3), the signal routing to selected terminal will be automatically performed.

When a subscriber calls a number to a subscriber who is in the mobile system (1) and is not available, the call is forwarded to a telephone number in the wire network (3) which is preselected by the subscriber and corresponds to a certain geographical position in the mobile coverage area.

The register (3) includes feeding device for control and reception of signals from the Home Location Register (HLR) in the mobile network, and storing buffers for storing of a number of different telephone numbers and a buffer for different position indications for the subscriber in question, and comparison devices which relates to a certain, for a subscriber, in the mobile system (1) existing position to a certain telephone number which is stored in said buffer and output devices which perform the by the system position related change-over.

The procedure according to the invention to move the call of a mobile telephone subscriber to the fixed network (2) without the subscriber needing to press push-buttons on his telephone at each change-over, the position the mobile subscriber has and which is stored in for example a register (HLR) in the mobile telephone system is performed in the following way. The position is transmitted to a register device (3) in the fixed network (2) which relates the subscriber's position in the mobile telephone system (1) to the fixed network. Compares this position with one by the subscriber previously selected number which corresponds to the number the subscriber wants that a call coming to his/her mobile telephone shall be rerouted to when the mobile telephone is not accessible. The transmission is then performed automatically via the previously mentioned register device (3) by means of one in the network known functionality and technology, at which the register (3) includes input device for control and reception of signals from the Home Location Register (HLR) in the mobile network, and storing buffers for storing of a number of different telephone numbers. Further a buffer for different position indications for the subscriber in question, and comparison devices which relates a certain, for a subscriber, in the mobile system (1) existing position to a certain telephone number which is stored in said buffer and output devices which perform the by the system position related change-over.

When the invention is used a user gives the system information about to which terminal connected to PSTN, within a restricted area, he/she wants to get automatic registration. In a certain area one wants registration to a certain number, and in another area one wants registration to another area. The automatic registration is performed when a mobile terminal connected to the "UTP"-service is disconnected, or is not accessible via the mobile network. By knowledge of where it was last received, i.e. which radio base which had the latest contact with the terminal, the automatic registration to an appointed, fixed terminal can be performed. When the mobile terminal is switched on the registration is transmitted to the mobile.

The invention is not restricted to the shown examples of embodiment but can be varied in just any way within the frame of the idea of invention as it is defined in the following patent claims.

## Claims

1. A telecommunication system, comprising a mobile communication system (1) and a fixed telecommunication system (2) which includes at least one telephone exchange, wherein the mobile communication system (1) also includes at least one mobile telephone exchange (MSC) and a Home Location Register (HLR) which contains subscriber information, **characterized in that** the fixed telecommunication system (2) includes a registration device (3) comprising a storing buffer for storing of a number of different telephone numbers, a buffer for storing of different position indications for a subscriber in question, and a comparison device which relate a certain, for a subscriber, in the mobile communication system (1) existing position to a certain telephone number which is stored in said buffer, wherein the registration device (3) is adapted to receive position parameters from the Home Location Register (HLR) where a subscriber is when a mobile station of said subscriber is turned off or is not accessible, wherein said comparison device is adapted to compare said position parameters with said different position indications stored in said buffer and relate said position to a telephone number in the fixed telecommunication system (2) stored in said buffer, wherein said telecommunication system is adapted to automatically reroute a call coming to said mobile station of said subscriber to said position related telephone number in the fixed telecommunication system (2).

2. A telecommunication system according to claim 1, **characterized in that** said registration device (3) also includes an input device for control and reception of signals from the Home Location Register (HLR).

3. A telecommunication system according to any one of claims 1 or 2, **characterized in that** the subscriber in advance has the option to select an optional telephone with a certain telephone number in the fixed telecommunication system (2) to which he/she wants his/her calls rerouted to when the used mobile station is not accessed by the mobile communication system (1).

4. A method for rerouting calls in a telecommunication system, comprising a mobile communication system (1) and a fixed telecommunication system (2) which includes at least one telephone exchange, wherein the mobile communication system (1) also includes at least one mobile telephone exchange (MSC) and a Home Location Register (HLR), which contains subscriber information, which method comprises the steps of:
- to receive, with the aid of a registration device (3) comprised in the fixed telecommunication system (2), position parameters from the Home Location Register (HLR) where a subscriber is when a mobile station of said subscriber is turned off or is not accessible;
- to compare said position parameters with different position indications for the subscriber in question stored in a buffer comprised in the registration device (3);
- to relate said position to a telephone number in the fixed telecommunication system (2) stored in a buffer comprised in the registration device (3); and
- to automatically reroute a call coming to said mobile station of said subscriber to said position related telephone number in the fixed telecommunication system (2).

5. A method for rerouting calls in a telecommunication system according to claim 4, **characterized in that** said method also comprises the step:
- to select an optional telephone with a certain telephone number in the fixed telecommunication system (2) to which said subscriber wants his/her calls rerouted to when the used mobile station is not accessed by the mobile communication system (1).

## Revendications

1. Système de télécommunication, comprenant un système de communication mobile (1) et un système de télécommunication fixe (2), qui comprend au moins un centre téléphonique, dans lequel le système de communication mobile (1) comprend également au moins un centre téléphonique mobile (CCM) et un enregistreur de localisation nominal (ELN) qui contient des informations relatives à l'abonné, **caractérisé en ce que** le système de télécommunication fixe (2) comprend un dispositif d'enregistrement (3) comprenant une mémoire tampon de stockage pour le stockage d'un certain nombre de numéros de téléphone différents, une mémoire tampon pour le stockage de différentes indications de position relatives à l'abonné concerné, et un dispositif de comparaison qui établit un rapport, pour un abonné déterminé, entre une position donnée existante dans le système de communication mobile (1) et un numéro de téléphone donné qui est stocké dans ladite mémoire tampon, dans lequel le dispositif d'enregistrement (3) est adapté pour recevoir des paramètres de position en provenance de l'enregistreur de localisation nominal (ELN) concernant la position d'un abonné lorsque la station mobile dudit abonné est arrêtée ou qu'elle n'est pas accessible, dans lequel ledit dispositif de comparaison est adapté pour comparer lesdits paramètres de position avec lesdites différentes indications de position stockées dans ladite mémoire tampon et pour établir un rapport entre ladite position et un numéro de téléphone dans le système de télécommunication fixe (2) stocké dans ladite mémoire tampon, dans lequel ledit système de télécommunication est adapté pour rediriger automatiquement un appel en entrée vers ladite station mobile dudit abonné audit numéro de téléphone correspondant à la position dans le système de télécommunication fixe (2).

2. Système de télécommunication selon la revendication 1, **caractérisé en ce que** ledit dispositif d'enregistrement (3) comprend également un dispositif d'entrée pour le contrôle et la réception de signaux envoyés par l'enregistreur de localisation nominal (ELN).

3. Système de télécommunication selon l'une quelconque des revendications 1 ou 2, **caractérisé en ce que** l'abonné a la possibilité de présélectionner un téléphone optionnel avec un numéro de téléphone donné dans le système de télécommunication fixe (2) vers lequel il/elle souhaite rediriger ses appels lorsque le système de communication mobile (1) ne peut pas accéder à la station mobile utilisée.

4. Procédé permettant de rediriger les appels dans un système de télécommunication, comprenant un système de communication mobile (1) et un système de télécommunication fixe (2), qui comprend au moins un centre téléphonique, dans lequel le système de communication mobile (1) comprend également au moins un centre téléphonique mobile (CCM) et un enregistreur de localisation nominal (ELN) contenant des informations relatives à l'abonné, lequel procédé comprend les étapes consistant à :
- recevoir, avec l'aide d'un dispositif d'enregistrement (3) compris dans le système de télécommunication fixe (2), des paramètres de position en provenance de l'enregistreur de localisation nominal (ELN) concernant la position d'un abonné lorsqu'une station mobile dudit abonné est arrêtée ou qu'elle n'est pas accessible ;
- comparer lesdits paramètres de position avec les différentes indications de position relatives à l'abonné concerné stockées dans une mémoire tampon comprise dans le dispositif d'enregistrement (3) ;
- établir un rapport entre ladite position et un numéro de téléphone dans le système de télécommunication fixe (2) stocké dans une mémoire tampon comprise dans le dispositif d'enregistrement (3) ; et
- rediriger automatiquement un appel en entrée vers ladite station mobile dudit abonné audit numéro de téléphone correspondant à la position dans le système de télécommunication fixe (2).

5. Procédé pour rediriger les appels dans un système de télécommunication selon la revendication 4, **caractérisé en ce que** ledit procédé comprend également l'étape :
- de sélection d'un téléphone optionnel avec un numéro de téléphone donné dans le système de télécommunication fixe (2) vers lequel ledit abonné souhaite rediriger ses appels lorsque le système de communication mobile (1) ne peut pas accéder à la station mobile utilisée.

## Patentansprüche

1. Telekommunikationssystem, das ein mobiles Telekommunikationssystem (1) und ein ortsfestes Telekommunikationssystem (2) mit mindestens einer Telefonvermittlungsstelle aufweist, wobei das mobile Telekommunikationssystem (1) außerdem mindestens eine Mobiltelefonvermittlungsstelle (MSC) und eine Teilnehmerinformation enthaltende Heimatdatei (HLR) umfasst, **dadurch gekennzeichnet, dass** das ortsfeste Telekommunikationssystem (2) eine Registriereinrichtung (3) einschließt, die einen Speicherpuffer zur Speicherung einer Anzahl verschiedener Telefonnummern, einen Puffer zur Speicherung verschiedener Positionsanzeigen für einen betreffenden Teilnehmer und eine Vergleichseinrichtung aufweist, die eine bestimmte für einen Teilnehmer in dem mobilen Telekommunikationssystem (1) bestehende Position mit einer bestimmten in dem genannten Puffer gespeicherten Telefonnummer verknüpfen, wobei die Registriereinrichtung (3) dazu ausgebildet ist, dass sie von der Heimatdatei (HLR) Positionsparameter darüber empfängt, wo sich ein Teilnehmer befindet, wenn eine Mobilstation dieses Teilnehmers ausgeschaltet oder nicht zugänglich ist, wobei die Vergleichseinrichtung so ausgebildet ist, dass sie diese Positionsparameter mit den verchiedenen in dem Puffer gespeicherten Positionsanzeigen vergleicht und die Position mit einer in dem Puffer gespeicherten Telefonnummer in dem ortsfesten Telekommunikationssystem (2) verknüpft, wobei das Telekommunikationssystem dazu ausgebildet ist, automatisch einen bei der genannten Mobilstation des entsprechenden Teilnehmers eingehenden Anruf zu der genannten mit der Position verknüpften Telefonnummer in der ortsfesten Telekommunikationsanlage (2) umzuleiten.

2. Telekommunikationssystem nach Anspruch 1, **dadurch gekennzeichnet, dass** die Registriereinrichtung (3) außerdem eine Eingabeeinrichtung für die Steuerung und den Empfang von Signalen von der Heimatdatei (HLR) umfasst.

3. Telekommunikationssystem nach einem der Ansprüche 1 oder 2, **dadurch gekennzeichnet, dass** der Teilnehmer zuvor die Möglichkeit hat, ein optionales Telefon mit einer gewissen Telefonnummer in dem ortsfesten Telekommunikationssystem (2) auszuwählen, zu dem er/sie seine/ihre Anrufe umgeleitet haben möchte, wenn das mobile Telekommunikationssystem (1) nicht auf die benutzte Mobilstation zugreift.

4. Verfahren zur Umleitung von Anrufen in einem Telekommunikationssystem, das ein mobiles Telekommunikationssystem (1) und ein ortsfestes Telekommunikationssystem (2) mit mindestens einer Telefonvermittlungsstelle aufweist, wobei das mobile Telekommunikationssystem (1) außerdem mindestens eine Mobiltelefonvermittlungsstelle (MSC) und eine Teilnehmerinformation enthaltende Heimatdatei (HLR) umfasst, wobei das Verfahren folgende Schritte aufweist:
- mit Hilfe einer in dem ortsfesten Telekommunikationssystem (2) enthaltenen Registriereinrichtung (3) Positionsparameter von der Heimatdatei (HLR) darüber zu empfangen, wo sich ein Teilnehmer befindet, wenn eine Mobilstation des entsprechenden Teilnehmers ausgeschaltet oder nicht zugänglich ist;
- die Positionsparameter mit verschiedenen Positionsanzeigen für den betreffenden Teilnehmer zu vergleichen, die in einem in der Registriereinrichtung (3) enthaltenen Puffer gespeichert sind;
- die Position mit einer in dem in der Registriereinrichtung (3) enthaltenen Puffer gespeicherten Telefonnummer in dem ortsfesten Telekommunikationssystem (2) zu verknüpfen; und
- einen bei der Mobilstation des Teilnehmers eingehenden Anruf zu der genannten mit der Position verknüpften Telefonnummer in dem ortsfesten Telekommunikationssystem (2) automatisch umzuleiten.

5. Verfahren zur Umleitung von Anrufen in einem Telekommunikationssystem nach Anspruch 4, **dadurch gekennzeichnet, dass** das Verfahren weiterhin den Schritt aufweist:
- ein optionales Telefon mit einer gewissen Telefonnummer in dem ortsfesten Telekommunikationssystem (2) auszuwählen, zu dem der/die genannte Teilnehmer(in) seine/ihre Anrufe umgelenkt haben möchte, wenn das mobile Telekommunikationssystem (1) nicht auf die benutzte Mobilstation zugreift.
